(19) Europäisches Patentamt / European Patent Office / Office européen des brevets

(11) **EP 3 168 773 A1**

(12) **EUROPEAN PATENT APPLICATION**
published in accordance with Art. 153(4) EPC

(43) Date of publication:
**17.05.2017 Bulletin 2017/20**

(51) Int Cl.:
*G06K 7/08* (2006.01)    *G07D 9/00* (2006.01)

(21) Application number: **15818450.7**

(22) Date of filing: **23.06.2015**

(86) International application number:
**PCT/JP2015/067938**

(87) International publication number:
**WO 2016/006428 (14.01.2016 Gazette 2016/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **08.07.2014 JP 2014140634**

(71) Applicant: **Nidec Sankyo Corporation Nagano-ken 393-8511 (JP)**

(72) Inventor: **SAKAMAKI, Hirotaka Nagano 393-8511 (JP)**

(74) Representative: **Becker Kurig Straus Patentanwälte Bavariastrasse 7 80336 München (DE)**

(54) **CARD READER**

(57)    The present application provides a card reader with which it is possible to prevent a decrease in the overall inductance of coils constituting an interfering magnetic field generating means even if it is impossible to ensure ample installation space for the coils constituting the interfering magnetic field generating means, such space being in the vicinity of a card insertion opening and the vicinity of a position through which a magnetic stripe passes. A card reader (1) is provided with: a card insertion opening (3) into which a card (2) having a magnetic stripe (2a) is inserted; a card passage through which the card (2), having been inserted from the card insertion opening (3), is passed; and a disturbing magnetic field generation means (7) that generates a magnetic field for disturbing illegal reading of magnetic data recorded in the magnetic stripe (2a). The disturbing magnetic field generation means (7) is provided with a plurality of coils (11, 12) connected in series, and a drive circuit (15) that has a capacitor (19) connected in parallel to the plurality of coils (11, 12), and that supplies a current to the plurality of coils (11, 12).

FIG. 1

# Description

[Technical Field]

The disclosure relates to a card reader structured to perform reading of magnetic data recorded on a card and/or recording magnetic data to a card.

[Background Art]

Conventionally, a card reader structured to read magnetic data recorded on a card and/or to record magnetic data on a card has been widely utilized. In an industry of financial institutions and the like where the card reader is utilized, conventionally, a so-called skimming has become a serious problem in which a criminal attaches a magnetic head to a card insertion part of the card reader to illegally acquire magnetic data of a card by using the magnetic head. Therefore, a card reader has been proposed which is structured to generate a disturbing magnetic field for preventing reading of magnetic data by a magnetic head for skimming (hereinafter, referred to as a "skimming magnetic head") (see, for example, Patent Literature 1).

The card reader described in Patent Literature 1 includes a card conveying mechanism structured to convey a card in an inside of the card reader and a disturbing magnetic field generator structured to generate a disturbing magnetic field. The disturbing magnetic field generator includes an iron core, a coil which is wound around the iron core, and a drive circuit for supplying a current to the coil. The drive circuit includes, for example, a DC power supply connected with the coil and a capacitor connected with the DC power supply in parallel with the coil. In the disturbing magnetic field generator, a resonance circuit is structured of the coil and the capacitor, and a frequency "f" of a magnetic field generated by the disturbing magnetic field generator is expressed in the following expression where "L" is an inductance of the coil and "C" is an electrostatic capacitance of the capacitor.

$$ f = 1 / (2\pi\sqrt{(L \times C)}) $$

Commonly, a frequency of a magnetic field suitable for a disturbing magnetic field is determined from a recording density of magnetic data recorded on a card and a conveyance speed of the card. In the card reader described in Patent Literature 1, an inductance "L" of the coil and an electrostatic capacitance "C" of the capacitor are set so as to obtain a frequency of a magnetic field so that the frequency "f" of the magnetic field generated by the disturbing magnetic field generator is suitable for a disturbing magnetic field.

[Citation List]

[Patent Literature]

[Patent Literature 1] Japanese Patent Laid-Open No. 2001-67524

[Summary of the Disclosure]

[Technical Problem]

A skimming magnetic head is commonly attached to a front face side of the card reader and at a position where a magnetic stripe formed on a card is passed. Therefore, in the card reader described in Patent Literature 1, in order to prevent reading of magnetic data by a skimming magnetic head, it is preferable that a coil structuring a disturbing magnetic field generator is disposed in the vicinity of a card insertion port into which a card is inserted and in the vicinity of a position where a magnetic stripe is passed. On the other hand, in some card reader, a sufficient arrangement space for the coil is difficult to secure in the vicinity of the card insertion port and in the vicinity of the position where a magnetic stripe is passed. In this case, the size of the coil is required to be reduced and disposed in the arrangement space.

However, when the size of the coil is reduced and the winding number of the coil is decreased, an inductance "L" of the coil is lowered. Therefore, when the size of the coil is reduced, a frequency "f" of a magnetic field generated by a disturbing magnetic field generator becomes large and thus the frequency "f" may be displaced from a frequency of a magnetic field suitable for a disturbing magnetic field. In this case, when an electrostatic capacitance "C" of a capacitor is increased, a frequency "f" can be set to a frequency of a magnetic field suitable for a disturbing magnetic field. However, when an electrostatic capacitance "C" of a capacitor is increased, the size of the capacitor is increased and, as a result, the size of a circuit board on which the capacitor is mounted may be increased.

In view of the problem described above, the disclosure provides a card reader which is capable of preventing lowering of a total inductance of a coil structuring a disturbing magnetic field generation means even when a sufficient arrangement space for the coil structuring the disturbing magnetic field generation means is unable to secure in the vicinity of the card insertion port and in the vicinity of a position where a magnetic stripe is passed.

[Means to solve the Problems]

To solve the above-mentioned problem, the disclosure provides a card reader including a card insertion port into which a card having a magnetic stripe is inserted, a card passage along which the card inserted into the card insertion port is passed, and a disturbing magnetic field generation means structured to generate a magnetic field for disturbing illegal reading of magnetic data recorded in the magnetic stripe. The disturbing magnetic field generation means includes a plurality of coils which are connected in series with each other, and a drive circuit having a capacitor connected in parallel with the plurality of the coils and structured to supply an electric current to the plurality of the coils.

In the card reader in accordance with the disclosure, the disturbing magnetic field generation means includes a plurality of coils connected in series with each other. Therefore, according to the disclosure, in a case that a sufficient arrangement space for the coil is unable to secure in the vicinity of the card insertion port and in the vicinity of a position where a magnetic stripe is passed, for example, one small coil can be disposed in the vicinity of the card insertion port and in the vicinity of a position where a magnetic stripe is passed, and a remaining coil is disposed in a predetermined arrangement space in an inside of the card reader. Further, in the disclosure, a plurality of coils are connected in series with each other. Therefore, even when a winding number of the small coil disposed in the vicinity of the card insertion port and in the vicinity of a position where a magnetic stripe is passed is decreased and the inductance of the coil becomes small, the total inductance of a plurality of the coils connected in series with each other can be increased. Accordingly, in the disclosure, even when a sufficient arrangement space for the coil structuring the disturbing magnetic field generation means is unable to secure in the vicinity of the card insertion port and in the vicinity of a position where a magnetic stripe is passed, the total inductance of the coil structuring the disturbing magnetic field generation means can be prevented from being lowered.

In the disclosure, for example, the disturbing magnetic field generation means includes a first coil and a second coil as the coils which are connected in series with each other, a first core formed of magnetic material in a bar shape around which the first coil is wound, and a second core formed of magnetic material in a bar shape around which the second coil wound. The first core is disposed so that a passing direction of the card and a longitudinal direction of the first core are substantially coincided with each other when viewed in a thickness direction of the card, and the second core is disposed so that a width direction of the card perpendicular to the passing direction of the card and a longitudinal direction of the second core are substantially coincided with each other when viewed in the thickness direction of the card.

As a skimming magnetic head, a differential type skimming magnetic head has been known in which a read head and a dummy head having substantially the same electrical characteristic are accommodated in one case body. The read head is a head structured to abut with a magnetic stripe of a card and read magnetic data, and the dummy head is adjacently disposed to the read head in a width direction of the card and is disposed at a position so as not to be abutted with the magnetic stripe.

When magnetic data of a card are read by the differential type skimming magnetic head, an output signal of the read head becomes a signal in which a signal corresponding to the magnetic data and a signal corresponding to an external magnetic field are superposed on each other, and an output signal of the dummy head becomes a signal corresponding to the external magnetic field. Therefore, in a case that magnetic data are read by a differential type skimming magnetic head, when a disturbing magnetic field is generated in a simple manner, a read signal of magnetic data which is not affected by the disturbing magnetic field can be obtained by obtaining a difference between the output signal of the read head and the output signal of the dummy head and thus, skimming cannot be prevented.

Therefore, in the disclosure, it is preferable that magnetic lines of force of the disturbing magnetic field generated by the disturbing magnetic field generation means cross in the width direction of the card a position where the magnetic stripe is passed when the card is inserted. According to this structure, even when a differential type skimming magnetic head is disposed at a position where a magnetic stripe is passed, the intensity of a disturbing magnetic field at a position where a read head is disposed and the intensity of the disturbing magnetic field at a position where a dummy head is disposed can be made different from each other and thus, an amplitude of an output signal of the read head caused by the disturbing magnetic field and an amplitude of an output signal of the dummy head caused by the disturbing magnetic field can be made different from each other. Therefore, even when a differential type skimming magnetic head is used as a skimming magnetic head, it is difficult to acquire a read signal of magnetic data which is not affected by the disturbing magnetic field from a difference between an output signal of the read head and an output signal of the dummy head and, as a result, skimming by a differential type skimming magnetic head can be prevented.

In the disclosure, it is preferable that the card reader includes a card insertion part in which the card insertion port is formed, a magnetic head which is disposed in an inside of the card insertion part, and a disconnection detection sheet in which a disconnection detection pattern configured to detect its own disconnection is formed. The disconnection detection sheet is disposed in the inside of the card insertion part so as to surround the magnetic head, the disconnection detection pattern is connected in series with the plurality of the coils, and the drive circuit is provided with a disconnection detecting function of the coil. According to this structure, when a criminal performs some trick on a magnetic head for illegally acquiring magnetic data read by the magnetic head, the disconnection detection pattern is disconnected. Further, when the disconnection detection pattern is disconnected, disconnection of the disconnection detection pattern connected in series with a plurality of the coils is detected by a disconnection detecting function for the coils provided in the drive circuit. In other words, according to this structure, even when a disconnection detection circuit for the disconnection detection pattern is not provided separately, it can be detected that some trick has been performed on the magnetic head by utilizing the disconnection detecting function for the coils provided in the drive circuit. Therefore, a structure of the card reader can be simplified.

In the disclosure, for example, the card reader includes a card insertion part in which the card insertion port is formed, and a magnetic head which is disposed in an inside of the card insertion part. The disturbing magnetic field generation means includes a first coil and a second coil as the coils which are connected in series with each other, the first coil is disposed in the vicinity of the magnetic head, and the second coil is disposed on a rear side with respect to the first coil in an inserting direction of the card.

[Effects of the Disclosure]

As described above, in the card reader in accordance with the disclosure, even when a sufficient arrangement space for the coil structuring the disturbing magnetic field generation means is unable to secure in the vicinity of the card insertion port and in the vicinity of a position where a magnetic stripe is passed, the total inductance of the coil structuring the disturbing magnetic field generation means can be prevented from being lowered.

[Brief Description of the Drawings]

Fig. 1 is an explanatory schematic plan view showing a structure of a front end side portion of a card reader in accordance with an embodiment of the disclosure.
Fig. 2 is a schematic circuit diagram showing a drive circuit structured to supply a current to a coil shown in Fig. 1.
Figs. 3(A), 3(B) and 3(C) are views for explaining intensity of a disturbing magnetic field generated by a disturbing magnetic field generation means shown in Fig. 1.
Fig. 4 is an explanatory schematic plan view showing a structure of a disturbing magnetic field generation means in accordance with another embodiment of the disclosure.

[Description of Embodiments]

Embodiments of the disclosure will be described below with reference to the accompanying drawings.

(Structure of Card Reader)

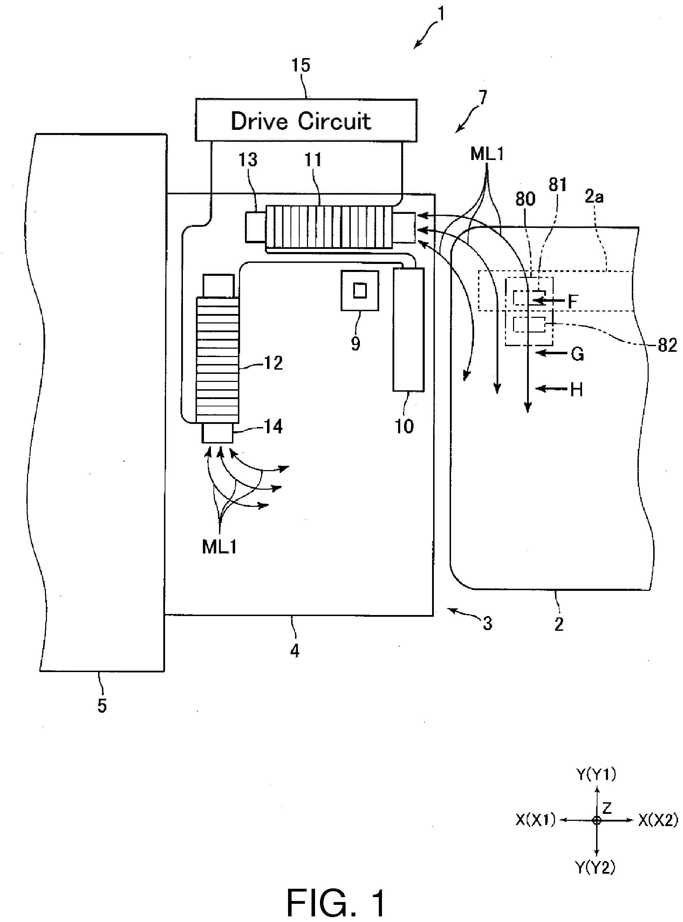

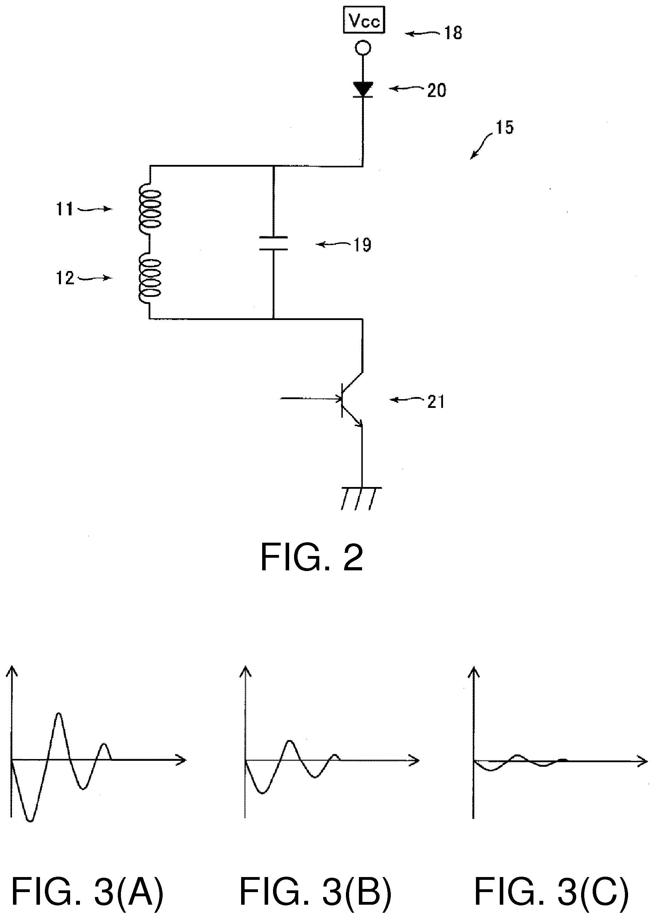

Fig. 1 is an explanatory schematic plan view showing a structure of a front end side portion of a card reader 1 in accordance with an embodiment of the disclosure. Fig. 2 is a schematic circuit diagram showing a drive circuit 15 structured to supply a current to coils 11 and 12 shown in Fig. 1. Figs. 3(A), 3(B) and 3(C) are views for explaining intensity of a disturbing magnetic field generated by a disturbing magnetic field generation means 7 shown in Fig. 1.

A card reader 1 in this embodiment is a device which is structured to perform reading of magnetic data recorded on a card 2 and/or recording of magnetic data on a card 2, and is, for example, mounted and used in a host apparatus such as an ATM. The card reader 1 includes a card insertion part 4 in which a card insertion port 3 into which a card 2 is inserted is formed, and a main body part 5. A card passage 6 where a card 2 inserted into the insertion port 3 is passed is formed in an inside of the card reader 1. Further, the card reader 1 includes a disturbing magnetic field generation means 7 structured to generate a magnetic field for disturbing illegal reading of magnetic data recorded on a card 2.

In this embodiment, a card 2 is passed in the "X" direction shown in Fig. 1. Specifically, a card 2 is inserted in the "X1" direction and the card 2 is ejected in the "X2" direction. In other words, the "X" direction is a passing direction of a card 2, the "X1" direction is an inserting direction of a card 2 into the card insertion port 3, and the "X2" direction is an ejecting direction of a card 2 from the card insertion port 3. Further, the "Z" direction in Fig. 1 perpendicular to the "X" direction is a thickness direction of a card 2 which is taken into the card reader 1, and the "Y" direction in Fig. 1 perpendicular to the "X" direction and the "Z" direction is a width direction of a card 2 which is taken into the card reader 1. In the following descriptions, the "X" direction is referred to as a front and rear direction, the "Y" direction is referred to as a right and left direction, and the "Z" direction is referred to as an upper and lower direction. Further, the "X1" direction side is referred to as a "rear (back)" side, the "X2" direction side is referred to as a "front" side, the "Y1" direction side is as a "right" side, and the "Y2" direction side is as a "left" side.

A card 2 is, for example, a rectangular card made of vinyl chloride whose thickness is about 0.7-0.8mm. A magnetic stripe 2a in which magnetic data are recorded is formed on a rear face of the card 2. A magnetic stripe 2a is formed along a longitudinal direction of a card 2 which is formed in a substantially rectangular shape. A card 2 is inserted into the card reader 1 in a state that its rear face faces a lower side and that a longitudinal direction of a card 2 is substantially coincided with the front and rear direction, and the card 2 is conveyed in an inside of the card reader 1. In accordance with an embodiment of the disclosure, an IC chip and/or an antenna for communication may be incorporated in the card 2. Further, the card 2 may be a PET (polyethylene terephthalate) card whose thickness is about 0.18-0.36mm or may be a paper card having a predetermined thickness.

A magnetic head (not shown) configured to perform reading of magnetic data recorded on a card 2 and/or recording of magnetic data to a card 2 and a card conveying mechanism (not shown) structured to convey a card 2 are disposed in an inside of the main body part 5. The card conveying mechanism includes, for example, drive rollers and pad rollers which are disposed so as to interpose a card passage therebetween in an upper and lower direction. The card insertion part 4 is attached to a front end face of the main body part 5. The card insertion part 4 is formed in a hollow shape. An inside of the card insertion part 4 is disposed with a pre-head (magnetic head) 9 for detecting whether magnetic data are recorded in a magnetic stripe 2a of a card 2 inserted into the card insertion port 3 or not, and a disconnection detection sheet 10 in which a disconnection detection pattern (not shown) for detecting its own disconnection is formed.

The pre-head 9 is disposed so as to face the card passage from a lower side. Further, the pre-head 9 is disposed in the right and left direction at a position where a magnetic stripe of a card 2 is passed. The disconnection detection sheet 10 is disposed so as to surround the pre-head 9. For example, the disconnection detection sheet 10 is disposed so as to surround the pre-head 9 from at least one of the front and rear direction, the right and left direction and the upper and lower direction. A disconnection detection pattern of the disconnection detection sheet 10 is, for example, formed so that a conductor pattern formed in a line shape is wound around in a spiral shape from an outer peripheral side of the disconnection detection sheet 10 to its inner peripheral side.

The disturbing magnetic field generation means 7 includes two coils 11 and 12, a core 13 formed of magnetic material around which the coil 11 is wound, a core 14 formed of magnetic material around which the coil 12 is wound, and a drive circuit 15 for supplying a current to the coils 11 and 12. The cores 13 and 14 are formed in a bar shape. In other words, the cores 13 and 14 are formed in a long and thin polygonal columnar shape such as a rectangular solid shape or a long and thin circular columnar shape. The coils 11 and 12 and the cores 13 and 14 are disposed in an inside of the card insertion part 4 which is formed in a hollow shape. Further, the coils 11 and 12 and the cores 13 and 14 are disposed to an upper side or a lower side of the card passage. In this embodiment, the coil 11 is a first coil, the coil 12 is a second coil, the core 13 is a first core, and the core 14 is a second core.

The coil 11 and the coil 12 are connected in series with each other. Specifically, the coil 11 and the coil 12 are connected in series with each other through the disconnection detection pattern of the disconnection detection sheet 10. In other words, the disconnection detection pattern of the disconnection detection sheet 10 is connected in series with two coils 11 and 12. One end of the disconnection detection pattern is connected with a conducting wire structuring the coil 11, and the other end of the disconnection detection pattern is connected with a conducting wire structuring the coil 12. The coil 11 is wound around the core 13 through a bobbin not shown and the coil 12 is wound around the core 14 through a bobbin not shown.

The core 13 is disposed so that a longitudinal direction of the core 13 and the front and rear direction are substantially coincided with each other when viewed in the upper and lower direction. The core 14 is disposed so that a longitudinal direction of the core 14 and the right and left direction are substantially coincided with each other when viewed in the upper and lower direction. Further, the core 13 and the coil 11 wound around the core 13 are disposed in the vicinity of the pre-head 9. In other words, the coil 11 and the core 13 are disposed in the vicinity of the card insertion port 3 and in the vicinity of a position where a magnetic stripe 2a is passed. Specifically, the coil 11 and the core 13 is adjacently disposed on a right side of the pre-head 9.

On the other hand, in this embodiment, various members are disposed in the vicinity of the pre-head 9 and thus there is no arrangement space for the coil 12 and the core 14 in the vicinity of the pre-head 9. Therefore, the core 14 and the coil 12 wound around the core 14 is disposed on a rear side with respect to the coil 11 and the core 13. Further, the coil 12 and the core 14 are disposed so that a right end face of the core 14 is disposed in the vicinity of a rear end face of the core 13 and a left end face of the core 14 is disposed on a left side with respect to the pre-head 9.

The drive circuit 15 includes, as shown in Fig. 2, a DC power supply 18 with which the coils 11 and 12 connected in series with each other are connected and a capacitor 19 which is connected with the DC power supply 18 in parallel with the coils 11 and 12. A resonance circuit is structured of the connected in series coils 11 and 12 and the capacitor 19. One end of the connected in series coils 11 and 12 (in this embodiment, one end of the coil 11) and one end of the capacitor 19 are connected with the DC power supply 18 through a diode 20, and the other end of the connected in series coils 11 and 12 (in this embodiment, the other end of the coil 12) and the other end of the capacitor 19 are grounded through a transistor 21. Further, the drive circuit 15 is provided with a disconnection detecting function of the coils 11 and 12.

In the drive circuit 15, when a drive current is supplied to a base of the transistor 21, electric power is supplied to the connected in series coils 11 and 12 and the capacitor 19 from the DC power supply 18 and an electric current is flowed to the coils 11 and 12 and an electric charge is accumulated in the capacitor 19. In this state, when supply of an electric current to the base of the transistor 21 is stopped, an electric current varied at a predetermined resonance frequency is flowed to the connected in series coils 11 and 12, and a disturbing magnetic field (AC magnetic field) varying at this resonance frequency is generated from the disturbing magnetic field generation means 7.

In this embodiment, a disturbing magnetic field is generated in which a direction of the magnetic lines of force "ML1" is directed from one of the front end face of the core 13 and the left end face of the core 14 to the other of the front end face of the core 13 and the left end face of the core 14. Specifically, a disturbing magnetic field (AC magnetic field) is generated whose direction of the magnetic lines of force "ML1" is periodically changed between a direction from the front end face of the core 13 to the left end face of the core 14 and a direction from the left end face of the core 14 to the front end face of the core 13. In this embodiment, a magnetic field is also generated in which a direction of the magnetic lines of force is directed from one of the rear end face of the core 13 and the right end face of the core 14 to the other of the rear end face of the core 13 and the right end face of the core 14.

As shown in Fig. 1, the magnetic lines of force "ML1" of a disturbing magnetic field generated by the disturbing magnetic field generation means 7 cross a position in the right and left direction where a magnetic stripe 2a is passed when a card 2 is inserted. Therefore, in a case that a differential type skimming magnetic head 80 having a read head 81 structured to abut with a magnetic stripe 2a and to read magnetic data recorded on the magnetic stripe 2a and a dummy head 82 which is adjacently disposed on a left side of the read head 81 at a position so as not to abut with the magnetic stripe 2a is attached in front of the card reader 1, the intensity of the disturbing magnetic field at a position where the read head 81 is disposed and the intensity of the disturbing magnetic field at a position where the dummy head 82 is disposed are different from each other. In other words, a difference is generated between an amplitude of an output signal of the read head 81 caused by the disturbing magnetic field and an amplitude of an output signal of the dummy head 82 caused by the disturbing magnetic field.

For example, in a case that the read head 81 or the dummy head 82 is disposed in the "F"-part in Fig. 1, an output signal of the read head 81 or the dummy head 82 caused by the disturbing magnetic field is varied as shown in Fig. 3(A). In a case that the read head 81 or the dummy head 82 is disposed in the "G"-part in Fig. 1, an output signal of the read head 81 or the dummy head 82 caused by the disturbing magnetic field is varied as shown in Fig. 3(B). Further, in a case that the read head 81 or the dummy head 82 is disposed in the "H"-part in Fig. 1, an output signal of the read head 81 or the dummy head 82 caused by the disturbing magnetic field is varied as shown in Fig. 3(C).

In the card reader 1 structured as described above, when a card 2 is to be inserted into the card insertion port 3 and the card 2 is taken into an inside of the card reader 1 and, when the card 2 is to be ejected from the card insertion port 3, the disturbing magnetic field generation means 7 generates a disturbing magnetic field. In other words, when reading and/or recording of magnetic data by a magnetic head 7 are performed, the disturbing magnetic field generation means 7 does not generate a disturbing magnetic field. Further, in a case that a card 2 is inserted into the card insertion port 3 and the card 2 is taken into an inside of the card reader 1, for example, the disturbing magnetic field generation means 7 generates a disturbing magnetic field until the entire card 2 inserted into the card insertion port 3 is taken into the inside of the card insertion part 4. Further, in a case that the card 2 is ejected from the card insertion port 3, for example, the disturbing magnetic field generation means 7 generates a disturbing magnetic field until the card 2 conveyed to a position where the card 2 is capable of being pulled out by a user has been pulled out by the user.

(Principal Effects in this Embodiment)

As described above, in this embodiment, the disturbing magnetic field generation means 7 includes two coils 11 and 12 which are connected in series with each other and two cores 13 and 14 around which two coils 11 and 12 are respectively wound. Therefore, according to this embodiment, even in a case that there is an arrangement space for the coil 11 and the core 13 in the vicinity of the pre-head 9 (in other words, in the vicinity of the card insertion port 3 and in the vicinity of a position where a magnetic stripe 2a is passed) but there is no arrangement space for the coil 12 and the core 14, the coil 12 and the core 14 can be disposed in a rear side portion of the card insertion part 4. Further, in this embodiment, two coils 11 and 12 are connected in series with each other and thus, even in a case that an arrangement space for the coil 11 and the core 13 is narrow in the vicinity of the pre-head 9 and thus, the coil 11 becomes small and, as a result, the winding number of the coil 11 is decreased and the inductance of the coil 11 becomes small, the total inductance of two coils 11 and 12 connected in series with each other can be set large.

Therefore, according to this embodiment, even when a sufficient arrangement space for the coils 11 and 12 cannot be secured in the vicinity of the card insertion port 3 and in the vicinity of a position where a magnetic stripe 2a is passed, lowering of the total inductance of two coils 11 and 12 can be prevented. As a result, even when a capacitor 19 having a relatively small electrostatic capacitance is used (in other words, even when a relatively small capacitor 19 is used), a frequency of a magnetic field generated by the disturbing magnetic field generation means 7 can be set in a frequency of a magnetic field suitable for a disturbing magnetic field.

In this embodiment, the magnetic lines of force "ML1" of the disturbing magnetic field generated by the disturbing magnetic field generation means 7 cross in the right and left direction a position where a magnetic stripe 2a is passed when the card 2 is inserted. Therefore, according to this embodiment, as described above, the intensity of a disturbing magnetic field at a position where the read head 81 is disposed and the intensity of the disturbing magnetic field at a position where the dummy head 82 is disposed are different from each other and thus, an amplitude of an output signal of the read head 81 caused by the disturbing magnetic field and an amplitude of an output signal of the dummy head 82 caused by the disturbing magnetic field are different from each other. Accordingly, in this embodiment, even when a differential type skimming magnetic head 80 is used as a skimming magnetic head, it is difficult to acquire a read signal of magnetic data which is not affected by the disturbing magnetic field from a difference between an output signal of the read head 81 and an output signal of the dummy head 82 and, as a result, skimming by the differential type skimming magnetic head 80 can be prevented.

In this embodiment, the disconnection detection sheet 10 in which a disconnection detection pattern is formed is disposed so as to surround the pre-head 9. Further, in this embodiment, the disconnection detection pattern of the disconnection detection sheet 10 is connected in series with two coils 11 and 12 and the drive circuit 15 is provided with a disconnection detecting function of the coils 11 and 12. Therefore, according to this embodiment, when a criminal performs some trick on the pre-head 9 for illegally acquiring magnetic data read from the pre-head 9, the disconnection detection pattern is disconnected. Further, when the disconnection detection pattern is disconnected, it is detected by the disconnection detecting function for the coils 11 and 12 provided in the drive circuit 15 that the disconnection detection pattern connected in series with the coils 11 and 12 has been disconnected. In other words, in this embodiment, even when a disconnection detection circuit for the disconnection detection pattern is not provided separately, it can be detected that some trick has been performed on the pre-head 9 by utilizing the disconnection detecting function for the coils 11 and 12 provided in the drive circuit 15. Therefore, according to this embodiment, the structure of the card reader 1 can be simplified.

(Modified Embodiment of Disturbing Magnetic Field Generation Device)

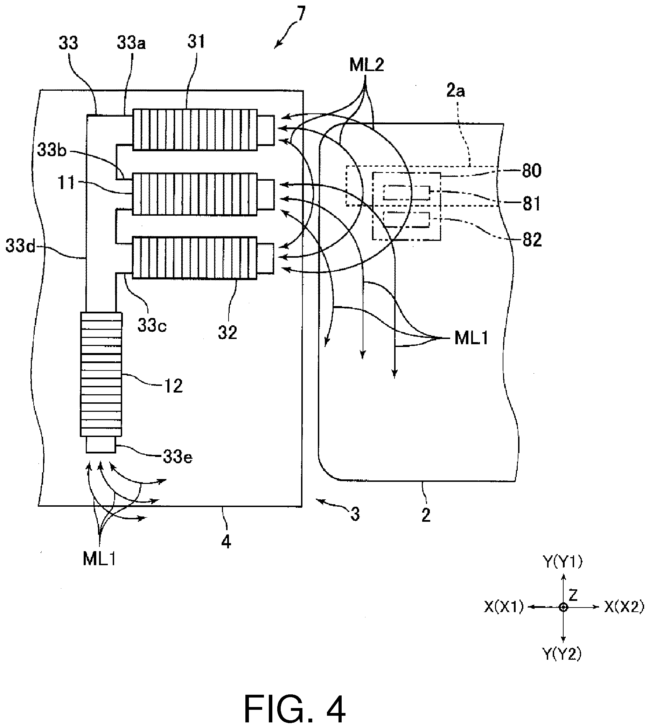

Fig. 4 is an explanatory schematic plan view showing a structure of a disturbing magnetic field generation means 7 in accordance with another embodiment of the disclosure.

In the embodiment described above, the disturbing magnetic field generation means 7 includes two coils 11 and 12 connected in series with each other. However, the disclosure is not limited to this embodiment. For example, when a relatively large space is existed in the vicinity of the pre-head 9, the disturbing magnetic field generation means 7 may be, as shown in Fig. 4, provided with two coils 31 and 32 connected in series with each other in addition to the coils 11 and 12. In this case, the coils 31 and 32 are not connected in series with the coils 11 and 12, and a drive circuit similarly structured to the drive circuit 15 is connected with the coils 31 and 32. Further, in this case, for example, the coils 11, 12, 31 and 32 are wound around one common core 33.

The core 33 is structured of a first core portion 33a, a second core portion 33b and a third core portion 33c in a bar shape which are disposed so that their longitudinal directions are the front and rear direction when viewed in the upper and lower direction, and a connecting core portion 33d in a bar shape which is disposed so that its longitudinal direction is the right and left direction when viewed in the upper and lower direction and connects rear ends of the first through the third core portions 33a through 33c. The first core portion 33a, the second core portion 33b and the third core portion 33c are disposed from the right side to the left side in this order. Further, the connecting core portion 33d is formed with a protruded part 33e which is protruded to the left side with respect to the third core portion 33c. The coil 31 is wound around the first core portion 33a through a bobbin, the coil 11 is wound around the second core portion 33b through a bobbin, the coil 32 is wound around the third core portion 33c through a bobbin, and the coil 12 is wound around the protruded part 33e through a bobbin.

The disturbing magnetic field generation means 7 shown in Fig. 4 generates, similarly to the embodiment described above, a first disturbing magnetic field (AC magnetic field) which is periodically switched between a mode that magnetic lines of force "ML1" are directed from a front end face of the second core portion 33b toward the left end face of the protruded part 33e and a mode that the magnetic lines of force "ML1" are directed from the left end face of the protruded part 33e toward the front end face of the second core portion 33b, and generates a second disturbing magnetic field (AC magnetic field) which is periodically switched between a mode that magnetic lines of force "ML2" are directed from a front end face of the first core portion 33a toward a front end face of the third core portion 33c and a mode that the magnetic lines of force "ML2" are directed from the front end face of the third core portion 33c toward the front end face of the first core portion 33a. The magnetic lines of force "ML2" cross in the right and left direction a position where a magnetic stripe 2a is passed when a card 2 is inserted. The magnetic lines of force "ML1" and the magnetic lines of force "ML2" are overlapped with each other on a front side with respect to the card insertion port 3.

Further, when a disturbing magnetic field generated between the front end face of the second core portion 33b and the left end face of the protruded part 33e by supplying an electric current to the coils 11 and 12 is referred to as a first disturbing magnetic field, and a disturbing magnetic field generated between the front end face of the first core portion 33a and the front end face of the third core portion 33c by supplying an electric current to the coils 31 and 32 is referred to as a second disturbing magnetic field, in this modified embodiment, a frequency of the first disturbing magnetic field and a frequency of the second disturbing magnetic field are different from each other, or a phase of the first disturbing magnetic field and a phase of the second disturbing magnetic field are displaced from reach other in a state that a frequency of the first disturbing magnetic field and a frequency of the second disturbing magnetic field are the same as each other.

In this modified embodiment, the intensity of the second disturbing magnetic field at a position where the read head 81 is disposed and the intensity of the second disturbing magnetic field at a position where the dummy head 82 is disposed are different from each other, and an amplitude of an output signal of the read head 81 caused by the second disturbing magnetic field and an amplitude of an output signal of the dummy head 82 caused by the second disturbing magnetic field are different from each other. Further, in this modified embodiment, an output signal of the read head 81 becomes a signal in which a signal corresponding to magnetic data recorded on a card 2, a signal corresponding to the first disturbing magnetic field and a signal corresponding to the second disturbing magnetic field are superimposed on each other, and an output signal of the dummy head 82 becomes a signal in which a signal corresponding to the first disturbing magnetic field and a signal corresponding the second disturbing magnetic field are superimposed on each other. Therefore, it is further difficult to acquire a read signal of magnetic data which is not affected by the first disturbing magnetic field and the second disturbing magnetic field from a difference between the output signal of the read head 81 and the output signal of the dummy head 82. Accordingly, in the modified embodiment, skimming by a differential type skimming magnetic head 80 can be prevented effectively.

Especially, in this modified embodiment, a frequency of the first disturbing magnetic field and a frequency of the second disturbing magnetic field are different from each other, or a phase of the first disturbing magnetic field and a phase of the second disturbing magnetic field are displaced from reach other while a frequency of the first disturbing magnetic field and a frequency of the second disturbing magnetic field are the same as each other. Therefore, it is further difficult to acquire a read signal of magnetic data which is not affected by the first disturbing magnetic field and the second disturbing magnetic field from a difference between the output signal of the read head 81 and the output signal of the dummy head 82. Accordingly, skimming by a differential type skimming magnetic head 80 can be prevented further effectively. In accordance with an embodiment of the disclosure, in this modified embodiment, it may be structured that a frequency of the first disturbing magnetic field and a frequency of the second disturbing magnetic field are the same as each other and a phase of the first disturbing magnetic field and a phase of the second disturbing magnetic field are coincided with each other.

In this modified embodiment, the coils 11, 12, 31 and 32 are wound around the one core 33 and thus leakage of the magnetic flux generated by the coils 11, 12, 31 and 32 can be restrained and, as a result, influence of the disturbing magnetic fields can be effectively applied to the skimming magnetic head 80. Further, in this modified embodiment, the coils 11, 12, 31 and 32 are wound around the one core 33, a structure of the disturbing magnetic field generation means 7 can be simplified. In this modified embodiment, it may be structured that the core around which the coils 11 and 12 are wound and the core around which the coils 31 and 32 are wound are separately formed from each other. In other words, in this modified embodiment, the disturbing magnetic field generation means 7 may be provided with two cores. Further, in this modified embodiment, the disturbing magnetic field generation means 7 may be provided with four cores around which four coils 11, 12, 31 and 32 are respectively wound.

(Other Embodiments)

Although the disclosure has been shown and described with reference to a specific embodiment, various changes and modifications will be apparent to those skilled in the art from the teachings herein.

In the embodiment described above, the disturbing magnetic field generation means 7 is provided with two coils 11 and 12 connected in series with each other. However, the disturbing magnetic field generation means 7 may be provided with three or more coils connected in series with each other. For example, the disturbing magnetic field generation means 7 may be provided with three connected in series coils. In this case, depending on an arrangement space for coils formed in the vicinity of the pre-head 9, it may be structured that one coil is disposed in the vicinity of the pre-head 9 and two remaining coils are disposed on a rear side with respect to the coil, or it may be structured that two coils are disposed in the vicinity of the pre-head 9 and one remaining coil may be disposed on a rear side with respect to the two coils.

In the embodiment described above, the core 13 is disposed so that a longitudinal direction of the core 13 and the front and rear direction are substantially coincided with each other when viewed in the upper and lower direction. However, the disclosure is not limited to this embodiment. For example, the core 13 may be disposed so that a longitudinal direction of the core 13 is inclined with respect to the front and rear direction when viewed in the upper and lower direction. Further, in the embodiment described above, the core 14 is disposed so that a longitudinal direction of the core 14 and the right and left direction are substantially coincided with each other when viewed in the upper and lower direction. However, the core 14 may be disposed so that a longitudinal direction of the core 14 is inclined with respect to the right and left direction when viewed in the upper and lower direction.

In the embodiment described above, the core 13 and the core 14 are separately formed from each other but the core 13 and the core 14 may be integrally formed with each other. In other words, the disturbing magnetic field generation means 7 may be provided with a core formed in an "L"-shape around which the coils 11 and 12 are wound. Further, in the embodiment described above, the coil 12 and the core 14 are disposed in an inside of the card insertion part 4. However, the coil 12 and the core 14 may be disposed in an inside of the main body part 5.

In the embodiment described above, the magnetic lines of force "ML1" of a disturbing magnetic field generated by the disturbing magnetic field generation means 7 cross in the right and left direction a position where a magnetic stripe 2a is passed when a card 2 is inserted. However, the disclosure is not limited to this embodiment. For example, when acquisition of a read signal of magnetic data by the skimming magnetic head 80 can be prevented, the magnetic lines of force "ML1" of a disturbing magnetic field generated by the disturbing magnetic field generation means 7 may not cross in the right and left direction a position where a magnetic stripe 2a is passed when a card 2 is inserted.

In the embodiment described above, one end of the disconnection detection pattern of the disconnection detection sheet 10 is connected with the coil 11 and the other end of the disconnection detection pattern of the disconnection detection sheet 10 is connected with the coil 12. However, the disclosure is not limited to this embodiment. For example, it may be structured that one end of the disconnection detection pattern is connected with the DC power supply 18 through the diode 20 and the other end of the disconnection detection pattern is connected with the coil 11. Alternatively, it may be structured that one end of the disconnection detection pattern is connected with the coil 12 and the other end of the disconnection detection pattern is grounded through the transistor 21. In these cases, the coil 11 and the coil 12 are directly connected with each other. Further, in the embodiment described above, the disconnection detection pattern is connected in series with two coils 11 and 12. However, the disconnection detection pattern may be connected with a disconnection detection circuit structured to detect disconnection of the disconnection detection pattern without connected in series with two coils 11 and 12. Further, the card reader 1 may be provided with no disconnection detection sheet 10.

In the embodiment described above, a magnetic stripe 2a is formed on a rear face of a card 2. However, a magnetic stripe 2a may be formed on a front face of a card 2 or a magnetic stripe 2a may be formed on both faces, i.e., a rear face and a front face of a card 2. Further, in the embodiment described above, the card reader 1 is a card conveyance type card reader including a card conveying mechanism. However, a card reader to which the structure of the disclosure is applied may be a manual type card reader structured to perform reading and/or recording of magnetic data while a card 2 is manually moved by a user. For example, the card reader to which the structure of the disclosure is applied may be a so-called dip type card reader in which reading and/or recording of magnetic data are performed when a card 2 is inserted into the card reader or when a card 2 is pulled out from the card reader.

[Reference Signs List]

| | |
|---|---|
| 1 | card reader |
| 2 | card |
| 2a | magnetic stripe |
| 3 | card insertion port |
| 4 | card insertion part |
| 7 | disturbing magnetic field generation means |
| 9 | pre-head (magnetic head) |
| 10 | disconnection detection sheet |
| 11 | coil (first coil) |
| 12 | coil (second coil) |
| 13 | core (first core) |
| 14 | core (second core) |
| 15 | drive circuit |
| 19 | capacitor |
| "ML1" | magnetic lines of force of disturbing magnetic field |
| "X" | passing direction of card |
| "X1" | inserting direction of card |
| "Y" | width direction of card |
| "Z" | thickness direction of card |

**Claims**

1. A card reader comprising:

   a card insertion port into which a card having a magnetic stripe is inserted;
   a card passage along which the card inserted into the card insertion port is passed; and
   a disturbing magnetic field generation means structured to generate a magnetic field for disturbing illegal reading of magnetic data recorded in the magnetic stripe;
   wherein the disturbing magnetic field generation means comprises:

      a plurality of coils which are connected in series with each other; and
      a drive circuit that has a capacitor connected in parallel with the plurality of coils and structured to supply an electric current to the plurality of coils.

2. The card reader according to claim 1, wherein the disturbing magnetic field generation means comprises:

a first coil and a second coil as the plurality of coils which are connected in series with each other;
a first core formed of magnetic material in a bar shape around which the first coil is wound; and
a second core formed of magnetic material in a bar shape around which the second coil wound,

the first core is disposed so that a passing direction of the card and a longitudinal direction of the first core are substantially coincided with each other when viewed in a thickness direction of the card, and the second core is disposed so that a width direction of the card perpendicular to the passing direction of the card and a longitudinal direction of the second core are substantially coincided with each other when viewed in the thickness direction of the card.

3. The card reader according to claim 1 or 2, wherein magnetic lines of force of the disturbing magnetic field generated by the disturbing magnetic field generation means cross in the width direction of the card a position where the magnetic stripe is passed when the card is inserted.

4. The card reader according to one of claims 1 through 3, further comprising:

a card insertion part in which the card insertion port is formed;
a magnetic head which is disposed in an inside of the card insertion part; and
a disconnection detection sheet in which a disconnection detection pattern configured to detect its own disconnection is formed,
wherein the disconnection detection sheet is disposed in the inside of the card insertion part so as to surround the magnetic head,
wherein the disconnection detection pattern is connected in series with the plurality of coils, and
wherein the drive circuit is provided with a disconnection detecting function of the plurality of coils.

5. The card reader according to one of claims 1 through 4, further comprising:

a card insertion part in which the card insertion port is formed; and
a magnetic head which is disposed in an inside of the card insertion part,
wherein the disturbing magnetic field generation means comprises a first coil and a second coil as the plurality of coils which are connected in series with each other, and
wherein the first coil is disposed in a vicinity of the magnetic head, and the second coil is disposed on a rear side with respect to the first coil in an inserting direction of the card.

FIG. 1

FIG. 2

FIG. 3(A)      FIG. 3(B)      FIG. 3(C)

FIG. 4

**INTERNATIONAL SEARCH REPORT**

| International application No. |
| --- |
| PCT/JP2015/067938 |

| A. CLASSIFICATION OF SUBJECT MATTER |
| --- |
| *G06K7/08*(2006.01)i, *G07D9/00*(2006.01)i |

According to International Patent Classification (IPC) or to both national classification and IPC

| B. FIELDS SEARCHED |
| --- |

Minimum documentation searched (classification system followed by classification symbols)
G06K7/00-7/14, G07D9/00-9/06, G07F7/00-7/12, G06K17/00

Documentation searched other than minimum documentation to the extent that such documents are included in the fields searched
Jitsuyo Shinan Koho      1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2007-164533 A (Hitachi-Omron Terminal Solutions, Corp.), 28 June 2007 (28.06.2007), paragraph [0048]; fig. 3 & US 2007/0131768 A1 & EP 1798662 A1 & CN 1983338 A | 1-5 |
| A | JP 2012-234535 A (NCR Corp.), 29 November 2012 (29.11.2012), paragraphs [0057] to [0060], [0116]; fig. 7 to 8 & US 2012/0280041 A1 & EP 2521107 A1 & CN 102842014 A | 1-5 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 July 2015 (24.07.15) | 04 August 2015 (04.08.15) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (July 2009)

**INTERNATIONAL SEARCH REPORT**

International application No.

PCT/JP2015/067938

C (Continuation).    DOCUMENTS CONSIDERED TO BE RELEVANT

| Category* | Citation of document, with indication, where appropriate, of the relevant passages | Relevant to claim No. |
|---|---|---|
| A | US 2013/0299586 A1  (YESIL ISMET),<br>14 November 2013 (14.11.2013),<br>paragraphs [0035] to [0042]; fig. 4<br>& WO 2012/060690 A1    & EP 2622586 A1 | 1-5 |
| A | JP 2013-012022 A  (Nidec Sankyo Corp.),<br>17 January 2013 (17.01.2013),<br>paragraph [0044]; fig. 1 to 3<br>& US 2014/0332591 A1    & WO 2013/001937 A1<br>& EP 2728515 A1          & CN 103403740 A | 4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001067524 A